# EUROPÄISCHE PATENTSCHRIFT

(11) **EP 0 849 124 B1**
(45) Veröffentlichungstag und Bekanntmachung des Hinweises auf die Patenterteilung: **02.02.2000**
(21) Anmeldenummer: 97118264.7
(22) Anmeldetag: 21.10.1997
(51) Int. Cl.: B60R 21/20

(54) **Fahrzeuglenkrad mit Airbagmodul**
Vehicle steering wheel with air bag restraint system
Volant de véhicule avec système de retenue à sac gonflable

(30) Priorität: 19.12.1996 DE 19653147
(43) Veröffentlichungstag der Anmeldung: 24.06.1998
(73) Patentinhaber: Bayerische Motoren Werke Aktiengesellschaft, 80788 München (DE)
(72) Erfinder: Kompass, Klaus, 84478 Waldkraiburg (DE); Spindler von Dreyse, Jörg, 85356 Freising (DE)

(56) Entgegenhaltungen:
- EP-A- 0 781 688
- EP-A- 0 798 171

## Beschreibung

Die Erfindung betrifft ein Fahrzeuglenkrad mit Airbagmodul.

Es ist bereits bekannt, Fahrzeuglenkräder mit Airbagmodulen zu versehen, um die Beschleunigung eines Fahrzeuginsassen, des Fahrers, bei einem Unfall langsam zu verringern. Mit dem Begriff Airbagmodul wird hier eine Baueinheit bezeichnet, die mindestens aus einem Luftsack und einem Gasgenerator besteht. Diese können zum Beispiel zusätzlich in einem Container mit Abdeckkappe untergebracht sein. Bisher wurden solche Airbagmodule nach der Lenkradmontage von vorne an das Lenkrad angeschraubt. Am Lenkrad selbst befindet sich dann noch eine lösbare Abdeckung, die beim Aufblasen des Luftsacks von diesem weggesprengt wird.

Zwischen Lenkrad und Abdeckung ist dann eine sichtbare Trennlinie vorhanden. Dadurch wird unter Umständen das Lenkraddesign nachteilig beeinflußt. Außerdem ist von Nachteil, daß das Airbagmodul auf aufwendige Weise mit dem Lenkrad verbunden werden muß. Meist geschieht dies durch eine schwierig zu bewerkstelligende Verschraubung von hinten.

Die DE 44 23 963 A1 beschreibt ein Fahrzeuglenkrad für die Bestückung mit einem integrierten Gassack-Rückhaltesystem, bei dem eine Abdeckung entfällt. Das Airbagmodul, hier Gassack-Rückhaltesystem genannt, wird in ein Lenkradkörper eines kunststoffumschäumten Lenkradkörpers von hinten, der Seite des Lenkradkörpers, die zur Lenkwelle hin zeigt, eingesetzt. Das Lenkradkörper wird mit dem Airbagmodul verbunden und dieses wiederum mit der Lenkwelle. So kann die Abdeckung als fester Bestandteil der Kunststoffumschäumung des Lenkradkörpers gestaltet werden, da eine Montage des Airbagmoduls von vorne, der Seite, die zum Fahrzeuginsassen hin zeigt, entfällt.

Ein solches Fahrzeuglenkrad hat den Nachteil, daß bei der Fahrzeuglenkraddemontage das Airbagmodul als integriertes Bauteil beteiligt ist. Ohne Demontage des Airbagmoduls ist eine Fahrzeuglenkraddemontage nicht möglich. Außerdem muß das Fahrzeuglenkrad immer zusammen mit dem Airbagmodul oder nach der Montage des Airbagmoduls im Fahrzeug befestigt werden, was aufgrund des im Airbagmodu! enthaltenen Sprengsatzes erhöhte Aufmerksamkeit bei der Montage des Fahrzeuglenkrades erfordert. Zusätzlich ist bei einem Austausch des Airbagmoduls immer das Fahrzeuglenkrad mit abzunehmen.

Desweiteren beschreibt die EP 0 781 688 A2 (Stand der Technik nach Art. 54(3) EPÜ) ein Fahrzeuglenkrad für die Bestückung mit einem Airbagmodul, bei dem ebenfalls eine Abdeckung als fester Bestandteil der Kunststoffumschäumung des Lenkradkörpers gestaltet ist. Das Airbagmodul wird in den kunststoffumschäumten Lenkradkörper von der Seite her eingesetzt. Es wird so mit dem Lenkradkörper verbunden und dieser wiederum mit der Lenkwelle. Deshalb kann die Abdeckung ebenfalls als fester Bestandteil der Kunststoffumschäumung des Lenkradkörpers gestaltet werden, da eine Montage des Airbagmoduls von vorne, der Seite, die zum Fahrzeuginsassen hin zeigt, entfällt.

Für ein Fahrzeuglenkrad, das mit oder ohne Airbageinrichtung verbaut werden kann, bei dem das Lenkraddesign nicht von der Airbageinrichtung beeinflußt wird und bei dem die Airbageinrichtung einfach und ohne Demontage des Lenkrads auswechselbar ist ergibt sich als Aufgabe der Erfindung, daß zum Herstellen der elektrischen Kontakte zwischen Airbagmodul und Steuereinrichtung kein zusätzlicher Montageaufwand anfallen soll. Außerdem soll die Montage in Verbindung mit den Wirkflächen zwischen Airbagmodul und Lenkradkörper eindeutig und sicher zu bewerkstelligen sein.

Die Aufgabe wird erfindungsgemäß mit den Merkmalen des Anspruchs 1 gelöst. Weitere Ausgestaltungen der Erfindung ergeben sich aus den Unteransprüchen.

Bei einem Lenkrad, bei dem der Lenkradkörper an seiner Umfangsfläche eine Öffnung besitzt, durch die ein Airbagmodul eingebracht werden kann, besitzen das Airbagmodul und der Lenkradkörper eine Verbindungseinrichtung, die sich beim Einbringen des Airbagmoduls in den Lenkradkörper zusammenfügt und dabei die notwendigen elektrischen Kontakte des Airbagmoduls mit einer Steuereinrichtung herstellt.

Eine Verbindungseinrichtung, die sich automatisch beim Einschieben des Airbagmoduls in den Lenkradkörper zusammenfügt hat den Vorteil, daß zum Herstellen der elektrischen Kontakte zwischen Airbagmodul und Steuereinrichtung kein zusätzlicher Montageaufwand anfällt. Außerdem ist die Montage in Verbindung mit den Wirkflächen zwischen Airbagmodul und Lenkradkörper eindeutig und sicher zu bewerkstelligen.

Eine vorteilhafte Ausführung der Erfindung sieht vor, daß die Öffnung durch eine Abdeckeinrichtung verschließbar ist. Das hat den Vorteil, daß die Öffnung im Umfang des Lenkradkörpers optisch auf einfache Weise kaschiert werden kann und daß das Innere des Lenkradkörpers vor Schmutzeintritt geschützt ist.

Eine bevorzugte Ausführung der Erfindung sieht vor, daß das Airbagmodul und der Lenkradkörper Wirkflächen oder Einrichtungen besitzen, die so miteinander zusammenwirken, daß das Airbagmodul beim Einbringen in den Lenkradkörper geführt wird und/oder daß das Airbagmodul in seiner Endposition im Lenkradkörper verriegelt festgelegt wird. So ist vorteilhafterweise eine einfache Montage des Airbagmoduls gewährleistet. Das Airbagmodul kann eindeutig definiert durch die Öffnung in seine Endposition geschoben werden, wo es zum Beispiel automatisch festgelegt, und zum Herausnehmen wieder entriegelt werden kann, etwa mit einem besonderen Werkzeug. Außerdem ist von Vorteil, daß das Airbagmodul, durch die Wirkflächen bedingt, immer in der selben Stellung ins Fahrzeuglenkrad eingebracht wird, was sowohl die Montagesicherheit, als auch die Funktionssicherheit der Airbageinrichtung erhöht.

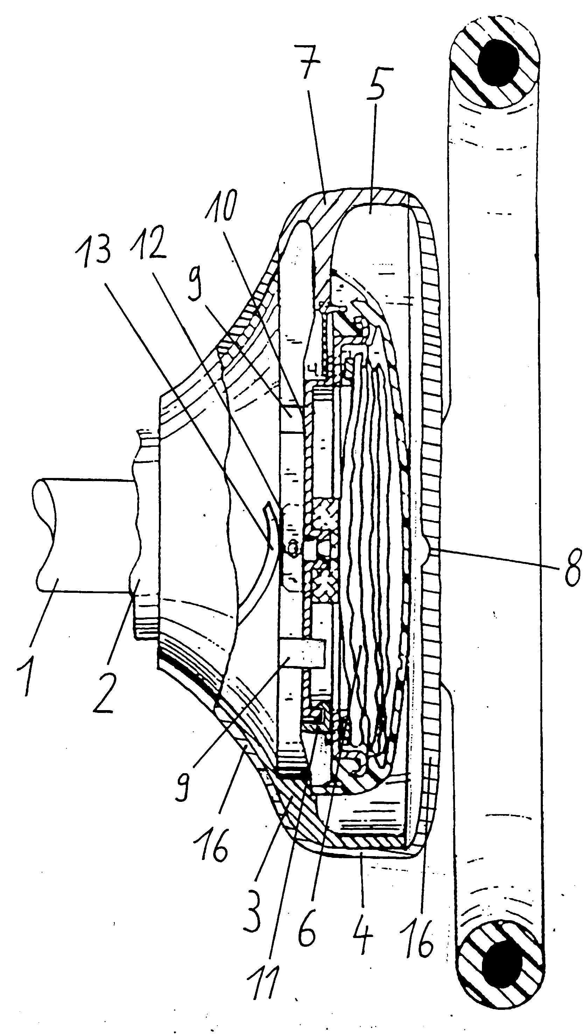

Ein bevorzugtes Ausführungsbeispiel der Erfindung ist in der nachfolgenden Beschreibung und der zugehörigen Zeichnung näher dargestellt. Die einzige Figur zeigt das auf der Lenkwelle befestigte Fahrzeuglenkrad in einem Teilschnitt mit eingebautem Airbagmodul.

Nach der einzigen Figur ist eine Lenkwelle 1 fest mit einem Nabenteil 2 eines Lenkradkörpers 3 verbunden. Der Lenkradkörper 3 besitzt an seiner seitlichen Umfangsfläche 4 eine Öffnung 5, durch die ein Airbagmodul 6 eingebracht worden ist. Die Öffnung 5 ist durch eine Abdeckeinrichtung 7 verschlossen, die ein Bestandteil des Airbagmoduls 6 ist und mit der Kunststoffumschäumung 16 des Lenkradkörpers 3 an dessen Umfangsfläche bündig abschließt.

Der Lenkradkörper 3 ist kunststoffumschäumt, wobei die zu einem nicht gezeichneten Fahrzeuginsassen hin gewandte Seite des Lenkradkörpers 3 ein fester Bestandteil der Kunststoffumschäumung 16 des Lenkradkörpers 3 ist. Dieser Bestandteil der Kunststoffumschäumung 16 des Lenkradkörpers 3 besitzt eine Aufreißkerbe 8, die, von außen unsichtbar, zum Airbagmodul 6 hin gerichtet ist.

Desweiteren sind im Lenkradkörper 3 Wirkflächen 9 und am Airbagmodul 6 Wirkflächen 10 angedeutet gezeichnet, die beim Einschieben des Airbagmoduls 6 durch die Öffnung 5 miteinander zusammenwirken, damit das Airbagmodul 6 nur in einer bestimmten Stellung durch die Öffnung 5 eingeschoben werden kann und bis zu der gezeichneten Endposition geführt wird. In dieser Endposition wird das Airbagmodul 6 durch Halteelemente 11 verriegelt festgelegt.

Beim definierten Einbringen des Airbagmoduls 6 über die Wirkflächen 9, 10 fügen sich ein Steckerelement 12 am Airbagmodul 6 und ein weiteres Steckerelement 13 im Lenkradkörper 3 automatisch zusammen. Diese beiden als Kontaktschienen ausgebildeten Steckerelemente 12, 13 einer Verbindungseinrichtung dienen dazu, die notwendigen elektrischen Kontakte des Airbagmoduls 6 mit einer nicht gezeichneten Steuereinrichtung herzustellen.

Da das Einschieben des Airbagmoduls 6 durch die Öffnung 5 in der bei Auslösung des Airbags nicht kraftführenden Richtung erfolgt, können die Halteelemente 11 sehr filigran ausgelegt werden. Sie müssen das Airbagmodul 6 nur in seiner Einbaulage fixieren und keine Kräfte bei seiner Auslösung aufnehmen. Durch die aus der Kunststoffumschäumung 16 des Lenkradkörpers 3 gebildete, zum Fahrzeuginsassen hin gewandte, Seite des Lenkradkörpers 3 ist es möglich, unterschiedlichste Lenkraddesignvarianten auszubilden, ausgerüstet mit einem Standardairbagmodul 6. Oder es können gleiche Lenkräder mit verschiedenen Airbagmodulen 6 ausgerüstet werden, ohne daß dies optisch auffällt. Die Aufreißkerbe 8 liegt nicht im Sichtbereich des Fahrzeuginsassen. Dies trägt zu einem homogenen Erscheinungsbild bei.

## Patentansprüche

1. Fahrzeuglenkrad mit einem Airbagmodul (6), mit einem mindestens teilweise kunststoffumschäumten Lenkradkörper (3), der zur Aufnahme des Airbagmoduls (6) ausgebildet ist, wobei die im wesentlichen zum Fahrer hin gewandte Seite des Lenkradkörpers (3) ein fester Bestandteil seiner Kunststoffumschäumung (16) ist und der Lenkradkörper (3) über ein Nabenteil (2) an einer Lenkwelle (1) befestigbar ist und an seiner Umfangsfläche (4) eine Öffnung (5) besitzt, durch die dasAirbagmodul (6) eingebracht werden kann, wobei das Airbagmodul (6) und der Lenkradkörper (3) eine Verbindungseinrichtung besitzen, die sich beim Einbringen des Airbagmoduls (6) in den Lenkradkörper (3) zusammenfügt und dabei die notwendigen elektrischen Kontakte des Airbagmoduls (6) mit einer Steuereinrichtung herstellt.

2. Fahrzeuglenkrad nach Anspruch 1, dadurch gekennzeichnet, daß die Öffnung (5) durch eine Abdeckeinrichtung (7) verschließbar ist.

3. Fahrzeuglenkrad nach einem der Ansprüche 1 oder 2, dadurch gekennzeichnet, daß das Airbagmodul (6) und der Lenkradkörper (3) Wirkflächen (9, 10) oder Einrichtungen besitzen, die so miteinander zusammenwirken, daß das Airbagmodul (6) beim Einbringen in den Lenkradkörper (3) von diesem geführt wird und/oder daß das Airbagmodul (6) in seiner Endposition im Lenkradkörper (3) verriegelt festgelegt wird.

4. Fahrzeuglenkrad nach einem der Ansprüche 2 bis 3, dadurch gekennzeichnet, daß die Abdeckeinrichtung (7) Teil des Airbagmoduls (6) ist.

## Claims

1. A vehicle steering wheel comprising an airbag module (6) and a steering-wheel body (3) at least partly embedded in plastic foam and adapted to receive the airbag module (6), wherein the side of the steering-wheel body (3) substantially facing the driver is a fixed component of the surrounding plastic foam (16) and a hub part (2) of the steering-wheel body (3) can be fastened to a steering shaft (1) and the peripheral surface (4) of the steering-wheel body has an opening (5) through which the airbag module (6) can be inserted, wherein the airbag module (6) and the steering-wheel body (3) have a connecting device which fits together when the airbag module (6) is inserted into the steering-wheel body (3) and makes the necessary electric contacts between the airbag module (6) and a control device.

2. A steering wheel according to claim 1, characterised in that the opening (5) is closable by a cover device (7).

3. A steering wheel according to claim 1 or claim 2, characterised in that the airbag module (6) and the steering-wheel body (3) have operative surfaces (9, 10) or devices which co-operate so that the airbag module (6), on insertion into the steering-wheel body (3), is guided thereby and/or that the airbag module (6) is held locked in its final position in the steering-wheel body (3).

4. A steering wheel according to claim 2 or claim 3, characterised in that the cover device (7) is part of the airbag module (6).

## Revendications

1. Volant de direction de véhicule comprenant un module de coussin d'air (6), un corps (3) de volant de direction entouré au moins en partie de mousse plastique et constitué pour recevoir le module de coussin d'air (6), le côté du corps (3) du volant de direction qui est tourné sensiblement en direction du conducteur, étant une pièce constitutive fixe de son entourage (16) en mousse plastique, et le corps (3) du volant de direction pouvant être fixé au moyen d'une pièce de moyeu (2) sur un arbre de direction (1), en possédant sur sa surface périphérique (4) une ouverture (5) à travers laquelle on peut mettre en place le module de coussin d'air (6),
ce module de coussin d'air (6) et le corps (3) du volant de direction possédant un système de liaison qui s'assemble lors de la mise en place du module de coussin d'air (6) dans le corps (3) du volant de direction et qui, dans ce cas, établit les contacts électriques nécessaires du module de coussin d'air (6) avec un système de commande.

2. Volant de direction de véhicule selon la revendication 1,
caractérisé en ce qu'
on peut fermer l'ouverture (5) au moyen d'un système de recouvrement (7).

3. Volant de direction de véhicule selon l'une des revendications 1 ou 2,
caractérisé en ce que
• le module de coussin d'air (6) et le corps (3) du volant de direction possèdent des surfaces opérationnelles (9, 10) ou des systèmes, qui coopèrent les uns avec les autres de telle sorte que le module de coussin d'air (6) est guidé par le corps (3) du volant de direction lors de sa mise en place dans celui-ci, et/ou
• le module de coussin d'air (6) est fixé en étant verrouillé dans sa position terminale dans le corps (3) du volant de direction.

4. Volant de direction de véhicule selon l'une des revendications 2 ou 3,
caractérisé en ce que
le système de recouvrement (7) fait partie du module de coussin d'air (6).
